# EUROPÄISCHE PATENTSCHRIFT

(11) **EP 2 174 314 B1**
(45) Veröffentlichungstag und Bekanntmachung des Hinweises auf die Patenterteilung: **31.10.2012**
(21) Anmeldenummer: 08784363.7
(22) Anmeldetag: 18.07.2008
(51) Int. Cl.: G03B 21/56, H04N 9/31, G02B 27/01, G03B 21/28, G03B 37/04, G09B 9/05

(54) **VERFAHREN UND ANORDNUNG ZUM PROJIZIEREN EINES BILDES AUF EINE PROJEKTIONSFLÄCHE**
METHOD AND ARRANGEMENT FOR PROJECTING AN IMAGE ONTO A PROJECTION SURFACE
PROCÉDÉ ET ENSEMBLE DE PROJECTION D'UNE IMAGE SUR UNE SURFACE DE PROJECTION

(30) Priorität: 27.07.2007 DE 102007035577
(43) Veröffentlichungstag der Anmeldung: 14.04.2010
(73) Patentinhaber: LDT Laser Display Technology Gmbh, 07745 Jena (DE)
(72) Erfinder: BIEHLIG, Wolfram, 07747 Jena (DE)
(74) Vertreter: Dietrich, Barbara
(86) Internationale Anmeldenummer: PCT/DE2008/001182
(87) Internationale Veröffentlichungsnummer: WO 2009/015636

(56) Entgegenhaltungen:
- EP-A- 1 566 783
- WO-A-97/26638
- US-A- 5 566 370

## Beschreibung

Die Erfindung bezieht sich auf ein Verfahren und eine Anordnung zur Bilddarstellung mit einem Laser bei welcher der Laser Laserlicht definierter Kohärenzlänge bei einer vorgegebenen Wellenlänge aussendet. Die Erfindung betrifft insbesondere ein Projektionsverfahren und eine Anordnung zur Durchführung des Verfahrens zur Kontrasterhöhung mittels eines erfindungsgemäßen Blendensystems. Die Anwendung bezieht sich vorzugsweise auf solche, wie sie in Flugsimulatoren vorkommt.

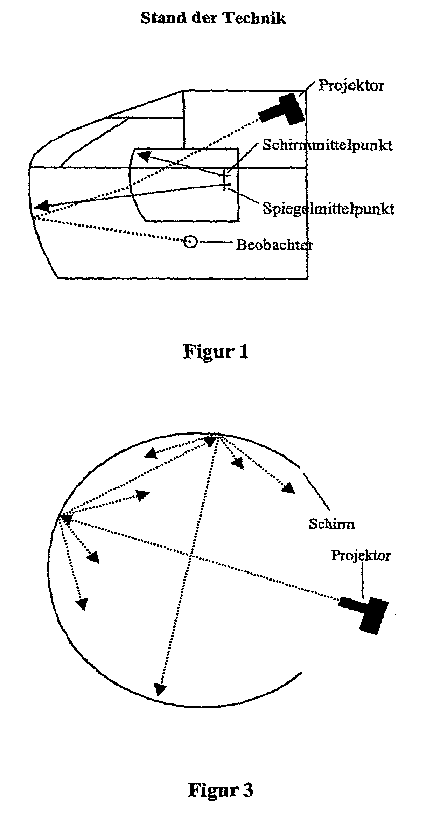

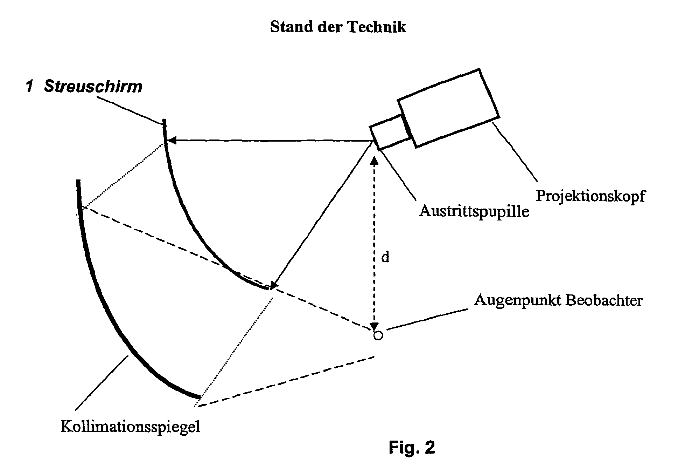

Eine Vorrichtung mit einem Laser zur Bilddarstellung ist beispielsweise aus der WO 98/20385 bekannt.
Aus der WO 2004/099842 A1 ist eine Bildprojektionsanlage bekannt, die zur Darstellung eines Bildes, vorzugsweise für die Flugsimulation, eine Rückprojektion verwendet.
Bekannt ist auch eine Anordnung der gleichen Gattung aus der DE 102006025638 A1, die ebenfalls eine Rückprojektion verwendet.
Diesbezüglich werden für die Flugsimulation häufig ein Aufbau und Anordnung wie in Figur 1 oder vereinfacht dargestellt in Figur 2 zur Anwendung gebracht. In einem beweglich aufgebauten Cockpitelement sitzt der Beobachter/Flugschüler und betrachtet über einen sphärischen Spiegel ein Bild das durch Rückprojektion auf einen Schirm abgebildet wird. Der Beobachter blickt dabei auf die konvexe Seite des Schirmes während der Projektor auf der konkaven Seite liegt.

Um ein großes Sichtfeld zu erzeugen sind jedoch in der Regel mehrere Projektoren erforderlich.
Innerhalb des Schirmes kommt es bei bisherigen Anordnungen zu deutlichen Kontrasteinbusen. Der von innen (konkave Seite) beleuchtete Schirm transmittiert nicht das gesamte Licht. Je nach Auslegung des Schirmes wird ein gewisser Lichtanteil reflektiert. Insbesondere erfolgt erstens von der streuenden Schirmoberfläche eine diffuse Reflexion, d.h. es erfolgt eine Reflexion in alle möglichen Richtungen bzgl. der Flächennormalen. Zweitens erfolgt an dem durchsichtigem Träger des Schirmes eine gerichtete Reflexion (etwa 4 Prozent der Lichtenergie). Dieser Vorgang ist in Figur 3 veranschaulicht. Durch die gerichtete Reflexion kann es auch zur Ausbildung von Doppelbildern kommen. Es kommt also zu einer wesentlichen Verschlechterung der Bildqualität. Aus Figur 3 wird deutlich, dass dies an gekrümmten Schirmen besonders kritisch ist.
Dieses Problem ist gut bekannt und es gibt Wege aufzeigen, dies zu vermeiden. In WO 2004/099842 A1 wird ein Schirm mit einer absorbierenden Schicht in der kleine Kügelchen eingebettet sind vorgeschlagen (black beads). Diese Schicht befindet sich auf der konkaven Seite des Schirmes und führt daher zu einer reduzierten Reflexion. Insbesondere bei der Projektion mit Laserprojektoren, die ein hochgradig kohärentes Licht projizieren, wird es bei diesem Schirm zu einer starken Ausprägung von Specklen kommen, daher ist ein derartiger Schirm hierfür nicht anwendbar. Im Patent US5760955 wird zur Lösung des Speckleproblemes ein zusätzlicher Volumenstreuer oder ein Gitter im Schirm vorgeschlagen. Es ist fraglich ob dies ausreicht die Speckle vollständig zu beseitigen. Es dürfte auf diesem Wege nur bei Licht mit nicht zu hohem Kohärenzgrad möglich sein. In WO9827726A1 werden Lichtblenden vorgeschlagen, die eine Bestrahlung durch benachbarte Projektionskanäle zu vermeiden suchen. Dabei erfolgt aber eine Projektion auf ebene Projektionsschirme. Dabei kommt es aber zu Qualitätsverlusten bei den erkennbaren Übergängen zwischen den einzelnen Bildsektoren. Mehrfachreflexionen spielen aber wie in Figur 3 erkennbar eine untergeordnete Rolle.

Die WO 97/26638 A1 beschreibt ein Bildprojektionssystem zur Großbilddarstellung. Das Bildprojektionsdarstellungssystem umfasst eine Flügel- oder Falt-Spiegelanordnung und eine Mehrzahl von Projektionseinrichtungen, wobei Lichtstrahlen von den Projektionseinrichtungen durch die Flügelspiegelanordnung optisch kombiniert werden, sodass der Anschein erweckt wird, dass sie aus einer gemeinsamen äquivalenten Augenposition projiziert werden und die dargestellte Information von benachbarten projizierten Darstellungen korrekt ausgerichtet ist.

Die EP 1 566 783 A beschäftigt sich mit einem Projektionssystem in Fahrzeugsimulatoren. Die in derartigen Simulatoren verwendeten Projektoren verwenden extrem lichtstarkes Licht. Diese unerwünschte Situation wird dadurch vermeiden, dass ein direkter Kontakt auf den Augenpunkt des Benutzers durch eine Maske etc. gesperrt wird.

Aufgabe der vorliegenden Erfindung ist es ein Verfahren und eine Anordnung zum Projizieren Projizieren eines Bildes auf eine Projektionsfläche zu entwickeln, das unter Verwendung mehrerer Projektoren ein möglichst großes Sichtfeld für den Betrachter erzeugt und dabei jedoch eine wesentlich verbesserte Bildqualität liefert, bei der die Übergänge der einzelnen Bildkanäle so ausgestaltet werden, dass der Betrachter keine Qualitätsunterschiede feststellen kann bzw. als störend empfindet.

Die Aufgabe wird durch ein Verfahren und eine Anordnung mit den Merkmalen der Ansprüche 13 bzw 1 gelöst. Dabei erzeugen mindestens zwei Projektoren ein Gesamtbild auf einem Projektionsschirm, welches durch die von den Einzelprojektoren erzeugten Bildsektoren gebildet wird und im Bereich der Überlappung der Bildsektoren eine Bildoptimierung durch ein Edge-Blending erfolgt, wobei die einzelnen Bildsektoren erfindungsgemäß durch ein geeignetes Blendensystem so abgeschirmt werden, dass diese eine Kontrasterhöhung bewirken.

Die Projektion der Bildsektoren erfolgt dabei auf eine gekrümmte Schirmoberfläche, vorzugsweise auf eine sphärisch gekrümmte Oberfläche.

Die einzelnen Bildsektoren werden erfindungsgemäß durch ein Blendensystem, bestehend aus vorzugsweise geschwärzten oder dunklen bzw. nicht reflektierenden Einzelblenden, voneinander abgeschirmt. Um zu erreichen, dass eine gewisse Überlappung an den Grenzen der einzelnen Bildsektoren noch vorhanden ist, sind die Blenden so angeordnet, dass diese nur so weit an den Projektionsschirm heranreichen, dass eine ausreichende Überlappung der Bildsektoren möglich ist, wobei die Projektoren in einem Abstand zum Projektionsschirm angeordnet sind, der geringer als der Krümmungsradius ist. Die Überlappungen liegen typischerweise bei 2 bis 8 %, vorzugsweise bei 3 bis 5 % um ein wirksames Edge-Blending zu gewährleisten. Eine zu große Überlappung würde zu Verlusten in der Lichtleistung und im Pixelbereich führen.
Die zu verwendenden Blenden haben in vorzugsweiser Ausgestaltung eine Beschaffenheit bzw. eine Oberflächengestaltung die ein abschirmende Schallwirkung besitzt. Somit werden störende Geräusche und Schallwellen der Projektoren vermindert. Die Blenden können dabei beispielsweise aus Kunststoff mit einer Strukturoberfläche sein, die genobbt, gelocht, bzw. sonstigen geformten Vertiefungen in runder, zylindrischer Form ausgestattet sein.
In speziellen Ausführungsformen können beispielweise 3, 5 oder 7 Projektoren verwendet werden. In einem Beispiel werden 7 Projektoren, die insgesamt ein Bildfeld von 220° mal 40° ausleuchten (vertikaler Winkelbereich: 40°). Dabei leuchtet jeder Bildprojektor einen gewissen Bildsektor aus.

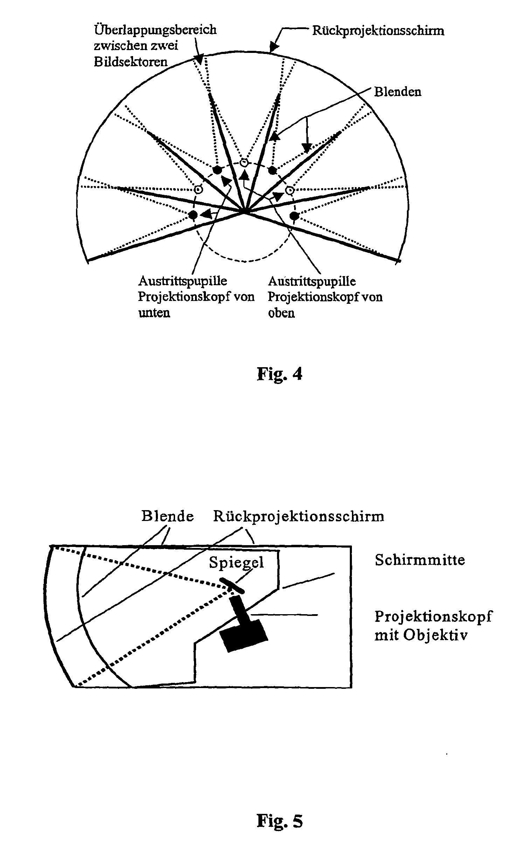

In Figur 4 ist eine Draufsicht eines Schirmes mit beispielhaft 7 Projektoren dargestellt. Der Schirm ist hierbei sphärisch gekrümmt. Seine Form erhält man, indem man einen Teil aus einer Kugeloberfläche herausschneidet. Es sind aber auch andere Oberflächenformen denkbar (Torus, Ellipsoid usw.).
Der Schirm besteht aus einem gekrümmten durchsichtigem Träger (meist Acryl mit einer Dicke von etwa 5 mm) und einer auf der konvexen Seite des Trägers angebrachten streuenden Schicht oder Folie, dem eigentlichen Schirmmaterial.

Der grundsätzliche Aufbau ist in Figur 5 erkennbar. Wenn nun mehrere Projektoren angeordnet werden müssen, so muss man eine effektive und kompakte Raumaufteilung durch die Projektoren realisieren. Zur Veranschaulichung einer derartigen Lösung dient Figur 5. Das Bild des Projektoren kann beispielweise über einen Planspiegel auf den Schirm gelenkt werden. Die Austrittspupille des Objektives liegt dabei in der Nähe der Spiegeloberfläche, aber möglichst nicht genau, da sonst Abbildungsfehler auftreten könnten. Es bietet sich nun an, dass die Projektoren abwechselnd von oben oder unten projizieren (vergl. Fig. 4). Das Objektiv liegt dann zwischen zwei benachbarten Blenden. Anzuordnende Umlenkspiegel sind nicht zwingend erforderlich, aber in Anbetracht der Baugrößen der Projektionsköpfe ggf. einzusetzen.

Wie in Figur 5 erkennbar, ist es in vorzugsweiser Ausführung erforderlich, dass die Blenden im Bereich des Projektorkopfes ausgespart sind. Diese Aussparungen müssen sehr sorgfältig vorgenommen werden, um insbesondere gegenüber liegende Schirmelemente voneinander abzuschirmen. Dazu sind mehrere Wege denkbar. Erstens, wenn die Projektoren wie beschrieben anwechselnd von oben oder unten auf den Spiegel projizieren, so könnten auch die Aussparungen in den Blenden abwechselnd oben oder unten liegen. Dadurch würde sich die notwendige Abschirmung ergeben. Zweitens, man kann auch im Bereich der Aussparung zwischen den Projektoren eine zusätzliche Blende anbringen, um das Licht geeignet abschirmen zu können (nicht in Fig. 5 dargestellt). Betrachten man dazu zwei benachbarte Projektoren, die von unten projizieren (die schwarz gefüllten Kreise in Fig. 4), dann müsste die genannte zusätzliche Blende dazwischen liegen. Das wäre in der Draufsicht gesehen der Winkel unter dem der von oben projizierende Projektor angeordnet ist (weiß gefüllter Kreis). Ebenso kann man eine solche zusätzliche Blende auch von oben zwischen den Projektoren anbringen, das wäre dann an den Winkeln möglich unter denen die von unten projizierenden Projektoren angebracht sind (schwarz gefüllte Kreise). Drittens, die Projektoren die oberhalb oder unterhalb der Planspiegel liegen werden jeweils gemeinsam in einem schallgedämmten Element eingeschlossen. Dieses Element muss so geformt sein, dass er die erforderliche Aussparung in der Blende verdeckt und kein Störlicht auf den Schirm gelangen kann. Diese beiden Elemente wirken dann als zusätzliche Blende, die die notwendige Abschirmung ergeben.
Durch die wie oben beschrieben angeordneten Blenden wird eine Mehrfachreflexion am Projektionsschirm deutlich verringert und es ergibt sich eine deutlich bessere Bildqualität mit höherem Kontrast und ohne Doppelbilder.

Die Anzahl der zu verwendenden Projektoren ist von der individuellen Auflösung und der verfügbaren Lichtleistung abhängig. Bevorzugt sind eine ungerade Anzahl an Projektoren zu verwenden, um einer Fugenbildung des Blending-Bereiches zu vermeiden.
In beispielhafter Anordnung wurden Blenden von 2 m Radius, 1, 50m Länge und 1,20 m Höhe verwendet.
Die Länge der Blenden ist so zu wählen, dass der erfindungsgemäße Effekt (Überlappung und Edge-Blending) ausreichend ist.

Figur 1 zeigt einen typischen Aufbau eines Flugsimulators.
Durch einen Projektor wird ein Rückprojektionsschirm beleuchtet, dieser wird über einen Kollimatorspiegel so abgebildet, dass ein Beobachter den Schirm mit entspanntem Auge betrachten kann. Der Schirm wird näherungsweise nach Unendlich abgebildet. Sowohl die Spiegel als auch die Schirmoberfläche sind meist sphärisch gekrümmt. Der Lichtweg ist gepunktet dargestellt.

Figur 2 zeigt die vereinfachte Darstellung des bekannten zugrunde liegenden Projektionsprinzips gemäß Stand der Technik.

Figur 3 zeigt Vielfachreflexionen an der konkaven Innenseite des Schirmes. Die diffuse Reflexion des Schirmmateriales kann etwa 50 Prozent des einfallenden Lichtes ausmachen. Dadurch kommt es bei herkömmlichen Anordnungen zu einer deutlichen Kontrastverschlechterung. Eine gerichtete Reflexion am Acrylträger kann zur Ausbildung von Doppelbildern führen (insbesondere an gegenüberliegenden Seiten).

Figur 4 zeigt als Draufsicht eine beispielhafte Anordnung der Projektionsköpfe (hier 7 Projektionsköpfe) innerhalb des sphärisch gekrümmten Schirmes gemäß der vorliegenden Erfindung. Die Blenden sorgen dafür, dass nur wenig Licht von benachbarten Projektionskanälen durch Mehrfachreflexion auf den Schirm gelangt. Es kommt somit zu einer wesentlich geringeren Kontrastverschlechterung.
Dadurch dass die Austrittspupille des Projektorobjektives etwas von der Kugelmitte zum Schirm hin verschoben ist und die Blenden nicht bis an den Schirm heranreichen, können sich die einzelnen Bildfelder (Randstrahlen gepunktet) am Schirm etwas überdecken und es ist ein Edge-Blending möglich.

Figur 5 zeigt die Seitenansicht zu Figur 3 mit einem dargestellten Projektionskopf.
Die Austrittspupille des Objektives liegt in der Nähe der Spiegeloberfläche. Die Randstrahlen sind gepunktet dargestellt. Durch die Verwendung eines ebenen Umlenkspiegels gelingt eine platzsparende Anordnung der Projektionsköpfe.
Es ist deutlich zu erkennen, dass die Blende nicht bis an den Schirm heran reicht (vergl. Abb. 4). Die Blende hat eine Aussparung, um den Projektionskopf in der Nähe des Umlenkspiegels anordnen zu können.

## Patentansprüche

1. Anordnung zum Projizieren eines Bildes auf eine Projektionsfläche, wobei zur Bild-projektion eine gekrümmter Projektionsschirm verwendet wird auf dem mindestens zwei Projektoren ein Gesamtbild erzeugen, welches durch die von den Einzelprojektoren erzeugten Bildsektoren gebildet wird und im Bereich der Überlappung der Bildsektoren eine Bildoptimierung durch ein Edge-Blending erfolgt und wobei die einzelnen Bildsektoren durch ein geeignetes Blendensystem so abgeschirmt werden, dass eine Kontrasterhöhung bewirkt wird, und wobei die Projektoren innerhalb des gekrümmten Schirms sowie in einem Abstand zum Projektionsschirm angeordnet sind, der geringer als der Krümmungsradius des Projektionsschirms ist und die Blenden radial zwischen den Projektoren angeordnet sind und nicht bis an den Schirm heranreichen, sodass sich die einzelnen Bildfelder am Schirm etwas überdecken.

2. Anordnung zum Projizieren eines Bildes auf eine Projektionsfläche nach Anspruch 1, **dadurch gekennzeichnet, dass** der Projektionsschirm sphärisch gekrümmt ist.

3. Anordnung zum Projizieren eines Bildes auf eine Projektionsfläche nach Anspruch 1, **dadurch gekennzeichnet, dass** für das Blendensystem geschwärzte, dunkle und/oder nichtreflektierende Blenden verwendet werden.

4. Anordnung zum Projizieren eines Bildes auf eine Projektionsfläche nach einem der Ansprüchen 1 bis 3, **dadurch gekennzeichnet, dass** die Blenden eine ausreichende Überlappung der Bildsektoren von 1 bis 8 %, vorzugweise von 3 bis 5 % bewirken.

5. Anordnung zum Projizieren eines Bildes auf eine Projektionsfläche nach einem der Ansprüche 1 bis 4, **dadurch gekennzeichnet, dass** der Projektionsschirm aus einem geeigneten Material besteht, welches eine auf der konvexen Seite des Trägers angebrachten streuenden Schicht oder Folie besteht.

6. Anordnung zum Projizieren eines Bildes auf eine Projektionsfläche nach einem der Ansprüche 1 bis 4, **dadurch gekennzeichnet, dass** eine ungerade Anzahl an Projektoren verwendet wird.

7. Anordnung zum Projizieren eines Bildes auf eine Projektionsfläche nach mindestens einem der Ansprüche 1 bis 6, **dadurch gekennzeichnet, dass** den Objektiven der Projektoren Umlenkungsspiegel nachgeordnet sind, die eine platzsparende Anordnung bewirken.

8. Anordnung zum Projizieren eines Bildes auf eine Projektionsfläche nach mindestens einem der Ansprüche 1 bis 7, **dadurch gekennzeichnet, dass** die Projektoren abwechselnd von oben und unten auf die Projektionsfläche projizieren.

9. Anordnung zum Projizieren eines Bildes auf eine Projektionsfläche nach Anspruch 8, **dadurch gekennzeichnet, dass** Blenden verwendet werden, die Aussparungen für die Projektoren aufweisen, die entsprechend der Anordnung der Projektoren oben oder unten erfolgt.

10. Anordnung zum Projizieren eines Bildes auf eine Projektionsfläche nach Anspruch 8 oder 9, **dadurch gekennzeichnet, dass** zusätzliche Blenden zwischen den Blenden zur Lichtabschirmung in geeigneter Weise angeordnet werden.

11. Anordnung nach den Ansprüchen 1 bis 10, **dadurch gekennzeichnet, dass** die Projektoren in schallgedämmte Elementen eingeschlossen sind, die als zusätzliche Blende wirken können.

12. Anordnung nach den Ansprüchen 1 bis 12, **dadurch gekennzeichnet, dass** die Blenden so angeordnet und/oder ausgestaltet sind, dass sie keine störenden Schalleffekte erzeugen.

13. Verfahren zum Projizieren eines Bildes auf eine Projektionsfläche, wobei zur Bild-projektion ein gekrümmter Projektionsschirm verwendet wird auf dem mindestens zwei Projektoren ein Gesamtbild erzeugen, welches durch die von den Einzelprojektoren erzeugten Bildsektoren gebildet wird und im Bereich der Überlappung der Bildsektoren eine Bildoptimierung durch ein Edge-Blending erfolgt und wobei die einzelnen Bildsektoren durch ein geeignetes Blendensystem so abgeschirmt werden, dass eine Kontrasterhöhung bewirkt wird, und wobei die Projektoren innerhalb des gekrümmten Schirms sowie in einem Abstand zum Projektionsschirm angeordnet sind, der geringer als der Krümmungsradius des Projektionsschirms ist und die Blenden radial zwischen den Projektoren angeordnet sind und nicht bis an den Schirm heranreichen, sodass sich die einzelnen Bildfelder am Schirm etwas überdecken.

14. Verfahren zum Projizieren eines Bildes auf eine Projektionsfläche nach Anspruch 13, **dadurch gekennzeichnet, dass** die Blenden eine ausreichende Überlappung der Bildsektoren von 1 bis 8 %, vorzugweise von 3 bis 5 % bewirken.

15. Verfahren zum Projizieren eines Bildes auf eine Projektionsfläche nach Anspruch 13 oder 14, **dadurch gekennzeichnet, dass** die Projektoren abwechselnd von oben und unten auf die Projektionsfläche projizieren.

## Claims

1. Arrangement for projecting an image onto a projection surface, wherein a curved projection screen is used for the image projection, on which screen at least two projectors produce a total image that is formed by the image sectors produced by the individual projectors, and image optimization is effected in the region of overlap of the image sectors by way of edge blending, and wherein the individual image sectors are screened off by a suitable shield system such that an increase in contrast is effected, and wherein the projectors are arranged within the curved screen and at a distance from the projection screen that is less than the radius of curvature of the projection screen and the shields are arranged radially between the projectors and do not extend all the way to the screen, such that the individual image fields slightly overlay each other on the screen.

2. Arrangement for projecting an image onto a projection surface according to Claim 1, **characterized in that** the projection screen is spherically curved.

3. Arrangement for projecting an image onto a projection surface according to Claim 1, **characterized in that** blackened, dark and/or non-reflective shields are used for the shield system.

4. Arrangement for projecting an image onto a projection surface according to one of Claims 1 to 3, **characterized in that** the shields effect a sufficient overlap of the image sectors from 1 to 8%, preferably from 3 to 5%.

5. Arrangement for projecting an image onto a projection surface according to one of Claims 1 to 4, **characterized in that** the projection screen is composed of a suitable material which consists of a diffusing layer or film applied on the convex side of the carrier.

6. Arrangement for projecting an image onto a projection surface according to one of Claims 1 to 4, **characterized in that** an odd number of projectors is used.

7. Arrangement for projecting an image onto a projection surface according to at least one of Claims 1 to 6, **characterized in that** deflection mirrors are arranged downstream of the objectives, which effect a space-saving arrangement.

8. Arrangement for projecting an image onto a projection surface according to at least one of Claims 1 to 7, **characterized in that** the projectors project onto the projection surface from above and from below in alternating fashion.

9. Arrangement for projecting an image onto a projection surface according to Claim 8, **characterized in that** shields are used which have cutouts for the projection which is effected from above or below in accordance with the arrangement of the projectors.

10. Arrangement for projecting an image onto a projection surface according to Claim 8 or 9, **characterized in that**, between the shields, additional shields are arranged in a suitable manner for the purpose of light screening.

11. Arrangement according to Claims 1 to 10, **characterized in that** the projectors are enclosed in sound-damped elements, which can act as additional shield.

12. Arrangement according to Claims 1 to 11, **characterized in that** the shields are arranged and/or configured such that they do not produce any disturbing sound effects.

13. Method for projecting an image onto a projection surface, wherein a curved projection screen is used for the image projection, on which screen at least two projectors produce a total image that is formed by the image sectors produced by the individual projectors, and image optimization is effected in the region of overlap of the image sectors by way of edge blending, and wherein the individual image sectors are screened off by a suitable shield system such that an increase in contrast is effected, and wherein the projectors are arranged within the curved screen and at a distance from the projection screen that is less than the radius of curvature of the projection screen and the shields are arranged radially between the projectors and do not extend all the way to the screen, such that the individual image fields slightly overlay each other on the screen.

14. Method for projecting an image onto a projection surface according to Claim 13, **characterized in that** the shields effect a sufficient overlap of the image sectors from 1 to 8%, preferably from 3 to 5%.

15. Method for projecting an image onto a projection surface according to Claim 13 or 14, **characterized in that** the projectors project onto the projection surface from above and from below in alternating fashion.

## Revendications

1. Ensemble de projection d'une image sur une surface de projection, dans lequel pour la projection d'image, on utilise un écran de projection courbe sur lequel au moins deux projecteurs produisent un image globale formée à partir des secteurs d'images produites par les projecteurs individuels et sur lequel une optimisation d'image par edge-blending est effectuée dans le domaine de la superposition des secteurs d'images et dans lequel les secteurs d'images individuels sont masqués par un système de caches approprié de manière à obtenir une augmentation du contraste, et dans lequel les projecteurs sont disposés à l'intérieur de l'écran courbe ainsi qu'à une distance de l'écran de projection, qui est inférieure au rayon de courbure de l'écran de projection, et les caches sont disposés radialement entre les projecteurs et n'atteignent pas l'écran, de telle sorte que les champs individuels des images se superposent quelque peu sur l'écran.

2. Ensemble de projection d'une image sur une surface de projection selon la revendication 1, **caractérisé en ce que** l'écran de projection a une courbure sphérique.

3. Ensemble de projection d'une image sur une surface de projection selon la revendication 1, **caractérisé en ce que** pour le système de caches, on utilise des caches noircis, sombres et/ou non réfléchissants.

4. Ensemble de projection d'une image sur une surface de projection selon une des revendications 1 à 3, **caractérisé en ce que** le système de cache produit une superposition suffisante des secteurs d'images de 1 à 8%, de préférence de 3 à 5%.

5. Ensemble de projection d'une image sur une surface de projection selon une des revendications 1 à 4, **caractérisé en ce que** l'écran de projection est constitué d'un matériau approprié, constitué d'une couche ou d'une feuille diffusante appliquée sur la face convexe du support.

6. Ensemble de projection d'une image sur une surface de projection selon une des revendications 1 à 4, **caractérisé en ce qu'**on utilise un nombre impair de projecteurs.

7. Ensemble de projection d'une image sur une surface de projection selon une au moins des revendications 1 à 6, **caractérisé en ce que** des miroirs de déviation sont disposés en aval des objectifs des projecteurs ce qui produit un ensemble plus compact.

8. Ensemble de projection d'une image sur une surface de projection selon une au moins des revendications 1 à 7, **caractérisé en ce que** les projecteurs projettent alternativement à partir du haut et du bas sur la surface de projection.

9. Ensemble de projection d'une image sur une surface de projection selon la revendication 8, **caractérisé en ce qu'**on utilise des caches comportant des évidements pour la projection, qui en fonction de la disposition des projecteurs, est effectuée en haut ou en bas.

10. Ensemble de projection d'une image sur une surface de projection selon la revendication 8 ou 9, **caractérisé en ce que** des caches supplémentaires sont disposés entre les caches pour masquer la lumière de manière appropriée.

11. Ensemble selon les revendications 1 à 10, **caractérisé en ce que** les projecteurs sont enfermés dans des éléments d'isolation acoustique pouvant faire office de caches supplémentaires.

12. Ensemble selon les revendications 1 à 11, **caractérisé en ce que** les caches sont disposées et/ou installés de telle sorte qu'ils n'engendrent aucun effet acoustique perturbant.

13. Procédé de projection d'une image sur une surface de projection, dans lequel pour la projection d'image, on utilise un écran de projection courbe sur lequel au moins deux projecteurs produisent un image globale formée à partir des secteurs d'images produites par les projecteurs individuels et sur lequel une optimisation d'image par edge-blending est effectuée dans le domaine de la superposition des secteurs d'images et dans lequel les secteurs d'images individuels sont masqués par un système de caches approprié de manière à obtenir une augmentation du contraste, et dans lequel les projecteurs sont disposés à l'intérieur de l'écran courbe ainsi qu'à une distance de l'écran de projection, qui est inférieure au rayon de courbure de l'écran de projection, et les caches sont disposés radialement entre les projecteurs et n'atteignent pas l'écran, de telle sorte que les champs individuels des images se superposent quelque peu sur l'écran.

14. Procédé de projection d'une image sur une surface de projection selon la revendication 13, **caractérisé en ce que** les caches produisent une superposition suffisante des secteurs d'images de 1 à 8%, de préférence de 3 à 5%.

15. Procédé de projection d'une image sur une surface de projection selon la revendication 13 ou 14, **caractérisé en ce que** les projecteurs projettent alternativement à partir du haut et du bas sur la surface de projection.
